# EUROPEAN PATENT SPECIFICATION

(11) **EP 4 183 539 B1**
(45) Date of publication and mention of the grant of the patent: **27.08.2025**
(21) Application number: 21843235.9
(22) Date of filing: 13.07.2021
(51) Int. Cl.: B26F 1/12, B26F 1/14, H01M 4/04, H01M 50/531, B26F 1/40, B26F 1/44, H01M 50/533

(54) **APPARATUS AND METHOD FOR CUTTING ELECTRODE, AND ELECTRODE MANUFACTURING EQUIPMENT INCLUDING SAME**
VORRICHTUNG UND VERFAHREN ZUM SCHNEIDEN EINER ELEKTRODE UND ELEKTRODENHERSTELLUNGSAUSRÜSTUNG DAMIT
APPAREIL ET PROCÉDÉ DE COUPE D'ÉLECTRODE, ET ÉQUIPEMENT DE FABRICATION D'ÉLECTRODE COMPRENANT LEDIT APPAREIL

(30) Priority: 14.07.2020 KR 20200087127; 07.07.2021 KR 20210089217
(43) Date of publication of application: 24.05.2023
(73) Proprietor: LG Energy Solution, Ltd., Seoul 07335 (KR)
(72) Inventor: PARK, Sung Chul, Daejeon 34122 (KR); KIM, Sang Wook, Daejeon 34122 (KR); LEE, Chung Hee, Daejeon 34122 (KR); PARK, Dong Hyeuk, Daejeon 34122 (KR)
(74) Representative: Goddar, Heinz J.
(86) International application number: PCT/KR2021/008980
(87) International publication number: WO 2022/015022

(56) References cited:
- CN-A- 110 919 750
- CN-U- 204 538 120
- JP-A- 2002 343 350
- JP-A- 2003 162 133
- JP-A- 2011 204 613
- KR-B1- 101 737 790
- KR-B1- 101 943 634
- KR-B1- 102 079 929
- US-A1- 2020 139 569

## Description

### CROSS-REFERENCE TO RELATED APPLICATION

The present application claims the benefit of the priority of Korean Patent Application Nos. 10-2020-0087127, filed on July 14, 2020, and 10-2021-0089217, filed on July 07, 2021.

### TECHNICAL FIELD

The present invention relates to an electrode cutting device and method, which simplify a cutting process for an electrode sheet, and an electrode manufacturing facility comprising the same.

### BACKGROUND ART

CN 204 538 120 U relates to the technical field of lithium-ion battery manufacturing, and to a device for preparing pole piece components of lithium-ion batteries.

In general, secondary batteries refer to chargeable and dischargeable batteries, unlike primary batteries that are not chargeable. Such a secondary battery is being widely used in the high-tech electronic fields such as mobile phones, notebook computers, and camcorders.

Such a secondary battery is classified into a can type secondary battery in which an electrode assembly is built in a metal can and a pouch type secondary battery in which an electrode assembly is built in a pouch. The pouch type secondary battery comprises an electrode assembly in which an electrode and a separator are alternately stacked, an electrolyte, and a pouch accommodating the electrode assembly and the electrolyte. Also, the pouch comprises an accommodation part accommodating the electrode assembly and an electrolyte and a sealing part sealing the accommodation part.

An electrode is manufactured by cutting an electrode sheet comprising a coating portion and a non-coating portion at regular intervals. That is, an electrode manufacturing method comprises a process of transferring an electrode sheet, a processing process of notching a non-coating portion of the transferred electrode sheet to process an electrode tab, a full-width cutting process of cutting the electrode sheet between the electrode tabs to manufacture in a full-width direction to manufacture the electrode, and an edge cutting process of slopingly cutting an edge of the electrode.

However, in the electrode manufacturing method, since the full-width cutting process and the edge cutting process are separately performed, it takes a lot of work time, and in particular, there is a problem in that the edge of the electrode is not cut a certain size during the edge cutting process.

### DISCLOSURE OF THE INVENTION

### TECHNICAL PROBLEM

The present invention is invented to solve the above problems, and an object of the present invention is to provide an electrode cutting device and method, in which a full-width cutting process and an edge cutting process are performed together to simplify a process, thereby significantly improving work efficiency, and in particular, an edge of the electrode is uniformly cut to prevent defects from occurring, and an electrode manufacturing facility comprising the same.

### TECHNICAL SOLUTION

An electrode cutting device according to the present invention for achieving the above object comprises: a die member on which an electrode sheet is disposed on a surface, on which a cutting line is partitioned; and a punch member configured to cut the electrode sheet disposed on the die member along the cutting line to manufacture an electrode, wherein the die member comprises: a disposition part which is provided at one side of the cutting line, on which the electrode sheet is disposed, and in which one end thereof disposed on the cutting line is formed as a disposition inclination surface to form a groove between the cutting line and the disposition inclination surface; a full-width cutting groove provided at the other side of the cutting line; and a V-shaped cutting groove provided on the cutting line and connected to the groove formed by the disposition inclination surface, wherein the punch member comprises: a full-width punch configured to cut the electrode sheet along the cutting line while being inserted into the full-width cutting groove, thereby manufacturing the electrode, wherein, since one end thereof corresponding to the disposition inclination surface is formed as a full-width inclination surface, an edge of the electrode disposed on the cutting line is cut to form an inclined surface; and a V-shaped punch configured to cut an edge of the electrode sheet disposed on the disposition inclination surface while being inserted into the V-shaped groove so as to form an inclined surface.

A reinforcing plate configured to improve strength and horizontality may be provided on a top surface of the disposition part.

The reinforcing plate may be coupled to a coupling groove formed in the disposition part, and a top surface of the reinforcing plate coupled to the coupling groove, an upper end surface of the full-width cutting groove, and an upper end surface of the V-shaped cutting groove may have the same height.

The electrode cutting device may further comprise a full-width support member configured to elastically support the electrode sheet disposed in the full-width cutting groove, wherein the full-width support member may comprise: a full-width support plate provided in the full-width cutting groove, provided to be movable in a direction of a bottom surface of the full-width cutting groove, and configured to elastically support the electrode sheet disposed in the full-width cutting groove; and a full-width elastic piece configured to provide elastic force to the full-width support plate so that the full-width support plate elastically supports the electrode sheet, wherein one end of the full-width support plate disposed on the cutting line is formed as the same inclined surface as the inclined surface of the full-width punch.

The electrode cutting device may further comprise a V-shaped support member configured to elastically support the electrode sheet disposed in the V-shaped cutting groove, wherein the V-shaped support member may comprise: a V-shaped support plate provided in the V-shaped cutting groove, provided to be movable in a direction of a bottom surface of the V-shaped cutting groove, and configured to elastically support the electrode sheet disposed in the V-shaped cutting groove; and a V-shaped elastic piece configured to provide elastic force to the V-shaped support plate so that the V-shaped support plate elastically supports the electrode sheet.

A cutting surface of the full-width punch configured to cut the electrode sheet and a cutting surface of the V-shaped punch may have different heights, and the cutting surface of the full-width punch may be provided to further protrude in a direction of the electrode sheet than the cutting surface of the V-shaped punch.

A full-width guide groove may be formed at one side of the full-width cutting groove, and a full-width guide protrusion movably inserted into the full-width guide groove may be formed on the full-width support plate.

A V-shaped guide groove may be formed at one side of the V-shaped cutting groove, and a V-shaped guide protrusion movably inserted into the V-shaped guide groove may be formed on the V-shaped support plate.

The electrode cutting device may further comprise a guide member configured to guide the punch member so as to descend or ascend vertically toward the die member.

The guide member may comprise: a lower guide plate on which the die member is installed; an upper guide plate on which the punch member is installed; and a guide rod provided on the lower guide plate and coupled to the upper guide plate to guide the upper guide plate so as to ascend or descend vertically toward the die member.

An electrode cutting method comprises: a disposition process of disposing an electrode sheet on a cutting line; and a punch process of cutting the electrode sheet along the cutting line to manufacture an electrode, wherein the punch process comprises a full-width cutting process of cutting an edge of one end of the electrode disposed on the cutting line together to form an inclined surface, and a V-shaped cutting process of cutting an edge of one end of the electrode sheet corresponding to the edge of the one end of the electrode to form an inclined surface.

The disposition process may comprise a first disposition process of disposing a portion of the electrode sheet, which is to be cut, on a cutting line that is partitioned between a disposition part and a full-width cutting groove and a second disposition process of disposing one end of the electrode sheet disposed on the cutting line in a V-shaped cutting groove of a die member, and in the punch process, a full-width punch of a punch member may be inserted into the full-width cutting groove to cut the electrode sheet along the cutting line, thereby manufacturing an electrode, wherein the punch process may comprise a full-width cutting process of cutting an edge of the electrode disposed on the cutting line together to form an inclined surface as an edge of the full-width punch disposed on the cutting line is formed as a full-width inclination surface, and a V-shaped cutting process of cutting an edge of the electrode sheet to form an inclined surface by inserting a V-shaped punch of the punch member into the V-shaped cutting groove.

In the first disposition process, a full-width support member may be provided in the full-width cutting groove to elastically support the electrode sheet disposed in the full-width cutting groove, and in the full-width cutting process, the full-width punch may cut the electrode sheet along the cutting line while being inserted into the full-width cutting groove in a state of pressing the electrode sheet disposed in the full-width cutting groove together with the full-width support member.

In the second disposition process, a V-shaped support member may be provided in the V-shaped cutting groove to elastically support the electrode sheet disposed in the V-shaped cutting groove, and in the V-shaped cutting process, the V-shaped punch may cut an edge of one end of the electrode sheet to form an inclined surface while being inserted into the V-shaped cutting groove in a state of pressing the electrode sheet disposed in the V-shaped cutting groove together with the V-shaped support member.

An electrode manufacturing facility according to the present invention comprises: a transfer device configured to transfer an electrode sheet, on which a non-coating portion is formed; a notching device configured to notch the non-coating portion of the electrode sheet transferred by the transfer device so as to process electrode tabs at regular intervals; and the electrode cutting device configured to cut the electrode sheet, on which the electrode tabs are processed by the notching device, so as to manufacture an electrode.

### ADVANTAGEOUS EFFECTS

The electrode cutting device according to the present invention comprises the disposition part, the die member comprising the full-width cutting groove and the V-shaped cutting groove, and the punch member comprising the full-width punch and the V-shaped punch. Therefore, the electrode sheet disposed on the die member may be cut in the full-width direction through the punch member, and also, the cut surface may be cut in the V shape, and as a result, the electrode having the inclined edge may be manufactured to simplify the processes, thereby improving the work efficiency. Particularly, the edge of the electrode may be uniformly cut to prevent the defects from occurring.

In addition, in the electrode cutting device according to the present invention, the die member may comprise the reinforcing plate, and thus, the electrode sheet may be stably disposed on the die member without being damaged.

In addition, in the electrode cutting device according to the present invention, the reinforcing plate may be coupled to the coupling groove formed in the disposition part. Thus, the top surface of the reinforcing plate coupled to the coupling groove, the upper end surface of the full-width cutting groove, and the upper end surface of the V-shaped cutting groove may have the same height to prevent the meandering defect of the electrode sheet from occurring, thereby improving the cutting accuracy of the electrode sheet.

In addition, in the electrode cutting device, the full-width support member may be disposed in the full-width cutting groove. Thus, the electrode sheet may be cut in the state in which the full-width punch and the full-width support member elastically press the electrode sheet, thereby improving the cutting accuracy of the electrode sheet.

In addition, in the electrode cutting device, the V-shaped support member may be disposed in the V-shape cutting groove. Thus, the end of the cut surface of the electrode sheet disposed on the die member may be cut in the state in which the V-shaped punch and the V-shaped support member elastically press the end of the cut surface of the electrode sheet, thereby improving the cutting accuracy when the edge of the electrode is cut.

### BRIEF DESCRIPTION OF THE DRAWINGS

FIG. 1 is a perspective view of an electrode cutting device according to a first embodiment of the present invention.
FIG. 2 is a perspective view illustrating a die member of the electrode cutting device according to a first embodiment of the present invention.
FIG. 3 is a plan view of FIG. 2,
FIG. 4 is a perspective view illustrating a punch member of the electrode cutting device according to a first embodiment of the present invention.
FIG. 5 is a bottom view of FIG. 4.
FIG. 6 is a cross-sectional view taken along line A-A of FIG. 1.
FIG. 7 is a cross-sectional view taken along line B-B of FIG. 1.
FIG. 8 is a flowchart illustrating an electrode cutting method according to the first embodiment of the present invention.
FIG. 9 is a plan view illustrating a disposition process in the electrode cutting method according to the first embodiment of the present invention.
FIG. 10 is a cross-sectional view illustrating a full-width cutting process in a punch process of the electrode cutting method according to the first embodiment of the present invention.
FIG. 11 is a plan view illustrating the electrode cut after the full-width cutting process.
FIG. 12 is a cross-sectional view illustrating a V-shaped cutting process in the punch process of the electrode cutting method according to the first embodiment of the present invention.
FIG. 13 is a plan view illustrating the electrode cut after the V-shaped cutting process.
FIG. 14 is a plan view illustrating an electrode manufacturing facility according to a second embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Electrode cutting device according to first embodiment of the present invention]

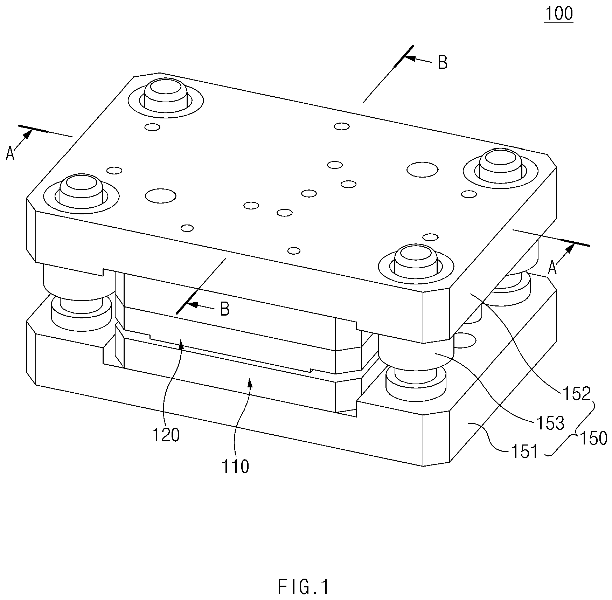

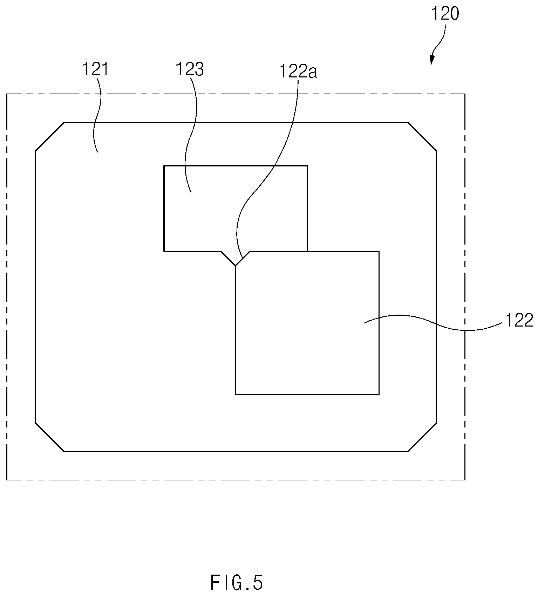

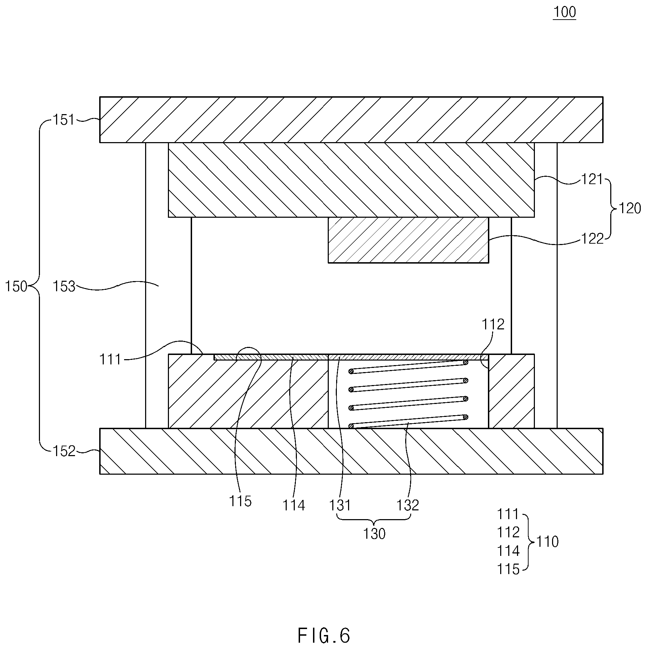

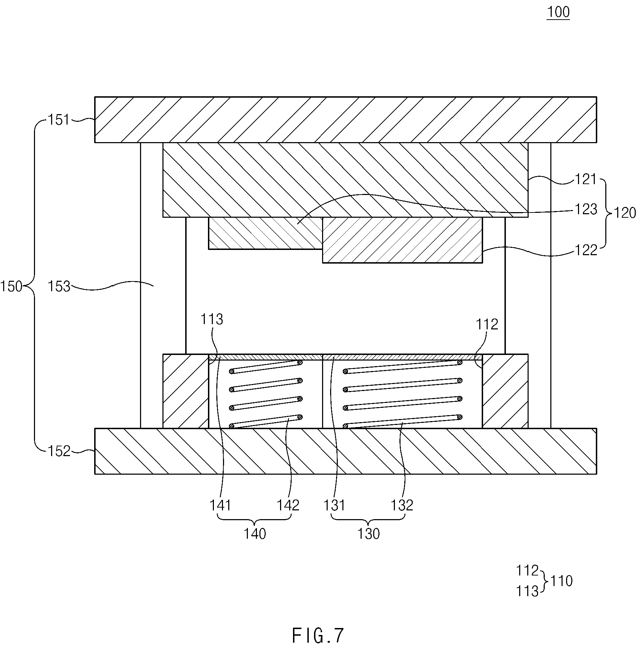

As illustrated in FIGS. 1 to 7 and 11, an electrode cutting device according to a first embodiment of the present invention comprises a die member 110, on which an electrode sheet 10 is disposed on a surface on which a cutting line is partitioned, and a punch member 120 that cuts the electrode 10 disposed on the die member along the cutting line to manufacture an electrode 10A.

The electrode sheet 10 comprises a coating portion provided with an electrode active material and an non-coating portion without the electrode active material, and the non-coating portion is processed into an electrode tab through a notching process.

In addition, the electrode sheet 10 on which the electrode tab is processed is transferred to the electrode cutting device according to the first embodiment of the present invention and then is cut into a certain size to be manufactured into the electrode 10A comprising the electrode tab and the coating portion.

### Die member

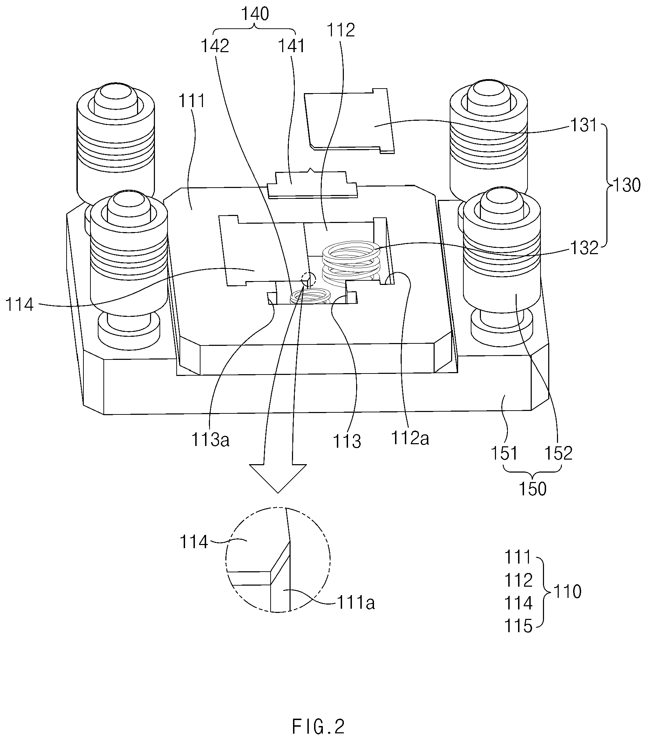

The electrode sheet is disposed on the die member 110. The die member 110 has a surface (a top surface when viewed in FIG. 2) that comprises a disposition part 111 provided at one side with respect to the cutting line, a full-width cutting groove 112 provided at the other side with respect to the cutting line, and a V-shaped cutting groove 113 provided on the cutting line.

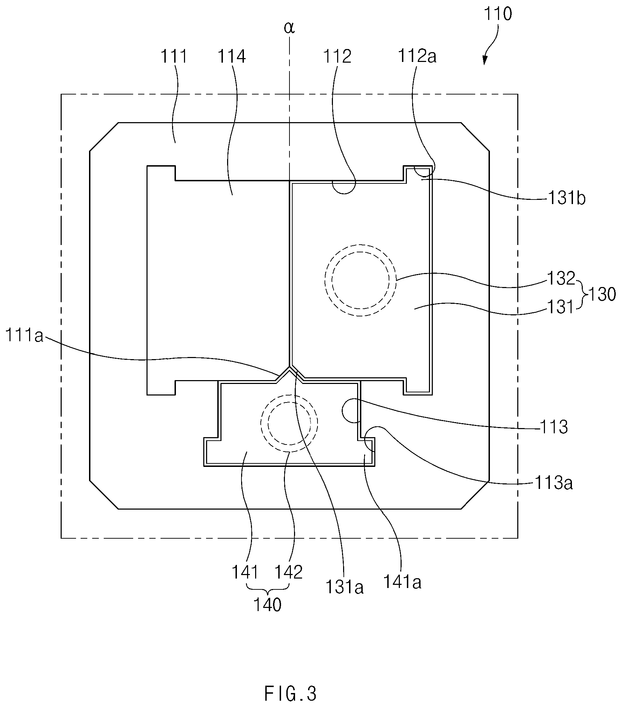

The disposition part 111 is provided at one side (a left side of the cutting line when viewed in FIG. 3) of the cutting line α that is partitioned on the top surface of the die member 110 and is provided as a horizontal surface so that the electrode sheet 10 is disposed.

Here, one end (a lower edge of the disposition part disposed on the cutting line when viewed in FIG. 3) of the disposition part 111 disposed on the cutting line α has a disposition inclination surface 111a, and thus, a groove may be formed between the cutting line α and the disposition inclination surface 111a. A V-shaped punch may be inserted into the groove formed between the cutting line α and the disposition inclination surface 111a to cut an edge of the electrode sheet disposed on the cutting line so as to form an inclined surface.

The full-width cutting groove 112 is provided at the other side (a right side of the cutting line when viewed in FIG. 3) of the cutting line α partitioned on the die member 110 and is formed as a groove having a predetermined depth. That is, the electrode sheet disposed in the full-width cutting groove 112 is disposed in a levitated state. In addition, the electrode sheet 10 disposed in the full-width cutting groove 112 may be elastically supported by a full-width support member to be described later.

The V-shaped cutting groove 113 is provided in the cutting line α (a lower end of the cutting line at which the disposition part 111 and the full-width cutting groove 112 meet each other) and is formed as a groove having a predetermined depth. The V-shaped cutting groove 113 is provided to be connected to the groove formed in the disposition inclination surface 111a. That is, the electrode sheet 10 disposed in the V-shaped cutting groove 113 is disposed in a levitated state. In addition, the electrode sheet 10 disposed in the V-shaped cutting groove 113 may be elastically supported by a V-shaped support member to be described later.

The cutting line is partitioned in a full-width direction of the electrode sheet disposed on the die member.

### Punch member

The punch member 120 is configured to manufacture the electrode by cutting the electrode sheet disposed on the die member along the cutting line, and comprises a punch body 121, a full-width punch 122, and a V-shaped punch 123.

The punch body 121 is provided above the die member 110 to descend or ascend toward the die member 110 as illustrated in FIG. 1.

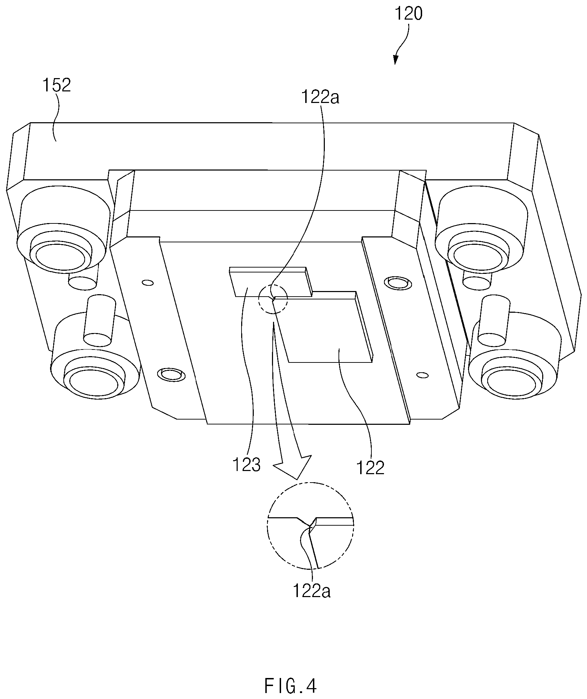

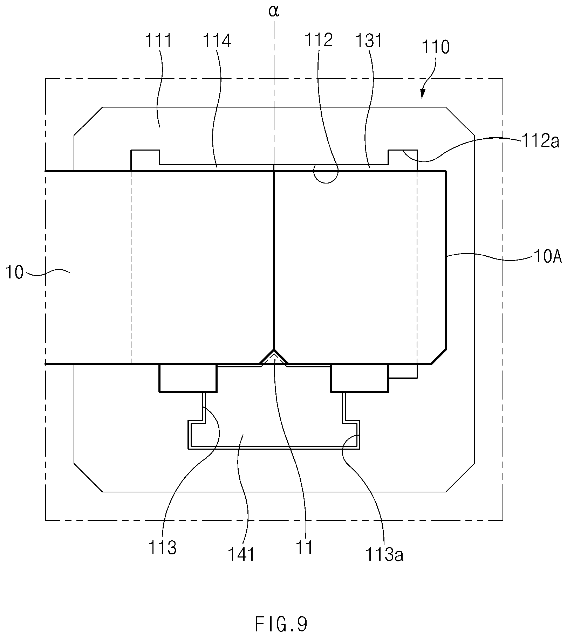

The full-width punch 122 is provided on a bottom surface of the punch body 121 as illustrated in FIG. 4 and is inserted into the full-width cutting groove 112 when the punch body 121 descends to cut the electrode sheet 10, which is disposed on the cutting line α, along the cutting line α, thereby manufacturing the electrode. That is, referring to FIG. 9, the full-width punch 122 cuts the electrode sheet disposed on the cutting line in the full-width direction of the electrode sheet to manufacture the electrode.

One end of the full-width punch 122, which corresponds to the disposition inclination surface 111a (a lower end of a left side of the full-width punch disposed on the cutting line when viewed in FIG. 3) may be formed as a full-width inclination surface 122a, and the full-width inclination surface 122a cuts an edge of the electrode 10A disposed on the cutting line to form an inclined surface.

That is, the full-width punch 122 cuts the electrode sheet disposed on the die member along the cutting line to manufacture the electrode, and simultaneously, cuts the edge of the electrode 10A disposed on the cutting line to form an inclined surface. In summary, the full-width punch 122 may cut the electrode sheet and the edge of the electrode at the same time, and as a result, the electrode 10A of which the edge is cut to form the inclined surface may be manufactured.

The V-shaped punch 123 is provided on the bottom surface of the punch body 121 and cuts the edge of the electrode sheet disposed in the groove formed by the disposition inclination surface 111a while being inserted into the V-shaped cutting groove 113 to form an inclined surface.

In the electrode cutting device, which has the above-described structure, according to the first embodiment of the present invention, when the punch member 120 descends toward the die member 110 after the electrode sheet 10 is disposed on the die member 110, while the full-width punch 122 of the punch member 120 is inserted into the full-width cutting groove 112, the electrode sheet is cut along the cutting line, and simultaneously, the edge of the electrode disposed on the cutting line is cut to form the inclined surface, and then, the V-shaped punch 123 of the punch member 120 cuts the edge of the electrode sheet disposed on the cutting line while being inserted into the V-shaped cutting groove 113.

Therefore, the electrode cutting device according to the first embodiment of the present invention may manufacture the electrode having the inclined edge through one cutting process, and thus, the cutting process may be simplified to improve work efficiency, and in particular, the cutting accuracy may be improved to prevent defects from occurring.

The electrode cutting device according to the first embodiment of the present invention may comprise a reinforcing plate 114 on a top surface of the disposition part 111. The reinforcing plate 114 has a flat top surface on which the electrode sheet is disposed and has strength greater than that of the disposition part. Thus, the disposition part may increase in horizontality. Particularly, the reinforcing plate 114 may be detachably coupled to the disposition part 111 to improve ease of maintenance. Particularly, since the reinforcing plate 114 has strength greater than that of the die member 110, the reinforcing plate 114, the reinforcing plate 114 may be prevented from being easily damaged by an external impact or a punching operation.

One end of the reinforcing plate 114 may be disposed to match the cutting line α, and thus, a cutting point and position of the electrode sheet may be more clearly identified.

The reinforcing plate 114 may be coupled to the disposition part 111 to slidably move in a direction toward or opposite to the cutting line α. Thus, when an end of the reinforcing plate 114 and the cutting line α do not match, the position of the reinforcing plate 114 may be adjusted to allow the end of the reinforcing plate 114 to match the cutting line α. Particularly, the position of the reinforcing plate 114 may be arbitrarily adjusted to change the position of the cutting line α.

The reinforcing plate 114 is coupled to the coupling groove 115 formed in the disposition part 111, in particular, a top surface of the reinforcing plate 114, an upper end surface of the full-width cutting groove 112, and an upper end surface of the V-shaped cutting groove 113 have the same height when viewed with respect to the electrode sheet. Thus, the horizontality of the electrode sheet 10 disposed on the die member may increase, and as a result, the cutting accuracy when punching the electrode sheet 10 may be improved.

The reinforcing plate 114 may be coupled to the coupling groove 115 so as to be adjustable in height in a direction of the bottom surface of the coupling groove 115 or in a direction opposite to the bottom surface of the coupling groove 115. Thus, the height of the reinforcing plate 114 may be adjusted to match the height of the upper end surface of the full-width cutting groove 112 and the upper end surface of the V-shaped cutting groove 113.

In the electrode cutting device according to the first embodiment of the present invention, a full-width support member 130 that elastically supports the electrode sheet disposed in the full-width cutting groove 112 is further disposed in the full-width support groove 112. Particularly, the full-width support member 130 serves to elastically press the electrode sheet together with the full-width punch when the full-width punch cuts the electrode sheet.

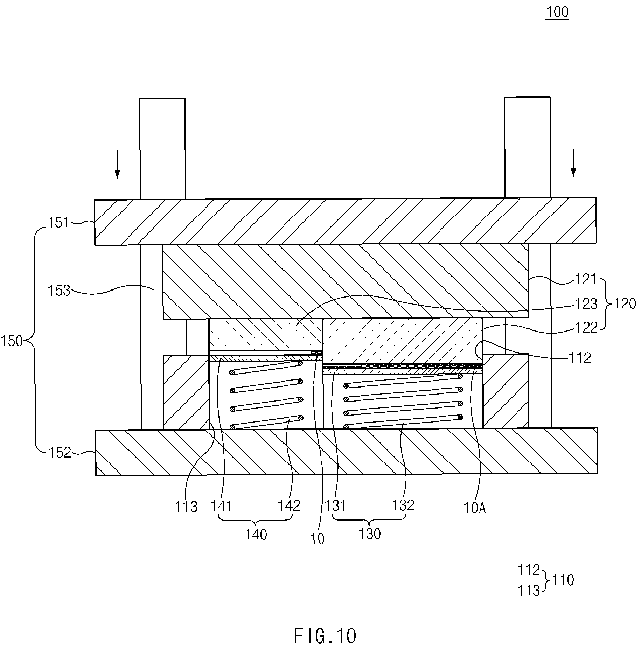

That is, the full-width support member 130 is provided to be movable in a direction of a bottom surface of the full-width cutting groove 112 (a downward direction of the full-width support member when viewed in FIG. 10) and comprises a full-width support plate 131 elastically supporting the electrode sheet 10 disposed in the full-width cutting groove 112 and a full-width elastic piece 132 providing elastic force so that the full-width support plate 131 is disposed on an upper end of the full-width cutting groove 112, and also, the full-width support plate elastically supports the electrode sheet 10.

Here, an end of the full-width support plate 131 disposed on the cutting line α has the same inclined surface 131a as the full-width inclination surface 122a of the full-width punch 122.

In the full-width support member 130 having the above-described configuration, the full-width punch 122 and the full-width support plate 131 may press both surfaces of the electrode sheet 10 at a potion at which the full-width punch 122 is in close contact with the electrode sheet 10 disposed in the full-width cutting groove 112, and in particular, the full-width punch 122 and the full-width support plate 131 elastically press the electrode sheet 10 by the full-width elastic piece 132 to prevent wrinkles from occurring when cutting the electrode sheet 10 disposed in the full-width cutting groove 112. In addition, the full-width punch 122 cuts the electrode sheet 10 disposed in the cutting groove 112 along the cutting line at a point at which the full-width punch 122 is inserted into the full-width cutting groove 112. Here, the full-width support plate 131 may elastically press the bottom surface of the electrode sheet 10 by the full-width elastic piece 132 to accurately cut the electrode sheet 10.

The full-width elastic piece may be provided as a coil spring.

In the electrode cutting device according to the first embodiment of the present invention, a V-shaped support member 140 that elastically supports the electrode sheet disposed in the V-shaped cutting groove 113 is further disposed in the V-shaped support groove 113.

The V-shaped support member 140 is provided to be movable in the direction of a bottom surface of the V-shaped cutting groove 113 (a downward direction of the V-shaped support member when viewed in FIG. 10) and comprises a V-shaped support plate 141 elastically supporting the electrode sheet 10 disposed in the V-shaped cutting groove 113 and a V-shaped elastic piece 142 providing elastic force so that the V-shaped support plate 141 is disposed on an upper end of the V-shaped cutting groove 113, and also, the V-shaped support plate elastically supports the electrode sheet 10.

In the V-shaped support member 140 having the above-described configuration, the V-shaped punch 123 and the V-shaped support plate 141 may press both surfaces of the electrode sheet 10 at a potion at which the V-shaped punch 123 is in close contact with the electrode sheet 10 disposed in the V-shaped cutting groove 113, and in particular, the V-shaped punch 123 and the V-shaped support plate 141 elastically press the electrode sheet 10 by the V-shaped elastic piece 142 to prevent wrinkles from occurring when cutting the electrode sheet 10 disposed in the V-shaped cutting groove 113. In addition, the V-shaped punch 123 cuts the electrode sheet 10 disposed in the cutting groove 113 along the cutting line at a point at which the V-shaped punch 123 is inserted into the V-shaped cutting groove 113. Here, the V-shaped support plate 141 may elastically press the bottom surface of the electrode sheet 10 by the V-shaped elastic piece 142 to accurately cut the electrode sheet 10.

The V-shaped elastic piece 142 may be provided as a coil spring.

In the electrode cutting device according to the first embodiment of the present invention, a cutting surface (a bottom surface of the full-width punch when viewed in FIG. 10) of the full-width punch 122, which cuts the electrode sheet 10 and a cutting surface (a bottom surface of the V-shaped punch when viewed in FIG. 10) of the V-shaped punch 123 have different heights when viewed with respect to the electrode sheet. In more detail, the cutting surface of the full-width punch 122 is provided to further protrude in the direction of the electrode sheet 10 than the cutting surface of the V-shaped punch 123. Thus, the electrode sheet 10 is cut along the cutting line to manufacture the electrode, and simultaneously, the edge of the electrode disposed on the cutting line is cut to form the inclined surface, and then the edge of the electrode sheet disposed on the cutting line is cut to form the inclined surface.

In the electrode cutting device according to the first embodiment of the present invention, a full-width guide groove 112a formed in a vertical direction is formed in the full-width cutting groove 112, and a full-width guide protrusion 131b movably inserted into in the full-width guide groove 112a in the vertical direction is formed on the full-width support plate 131. Thus, the full-width support plate 131 provided in the full-width guide groove 112a may vertically move to prevent the electrode sheet disposed on the full-width support plate 131 from moving.

In the electrode cutting device according to the first embodiment of the present invention, a V-shaped guide groove 113a formed in the vertical direction is formed in the V-shaped cutting groove 113, and a V-shaped guide protrusion 141a movably inserted into in the V-shaped guide groove 113A in the vertical direction is formed on the V-shaped support plate 141. Thus, the V-shaped support plate 141 provided in the V-shaped guide groove 113A may vertically move to prevent the electrode sheet disposed on the V-shaped support plate from moving.

The electrode cutting device according to the first embodiment of the present invention further comprises a guide member 150 that guides the punch member 120 to descend or ascend vertically toward the die member 110.

That is, the guide member 150 comprises a lower guide plate 151 on which the die member 110 is installed, an upper guide plate 152 on which the punch member 120 is installed, and a guide rod 153 having a lower end, which is provided on the lower guide plate 151 when viewed in FIG. 1, and an upper end, which is coupled so that the upper guide plate 152 descends or ascends vertically when viewed in FIG. 1.

The guide member 150 having the above-described configuration may allow the upper guide plate 152 to vertically move along the guide rod 153 and thus may guide the punch member 120 provided on the upper guide plate 152 to descend or ascend vertically toward the die member 110. Therefore, the electrode sheet may be cut vertically and thus be improved in cutting accuracy.

Therefore, the electrode cutting device according to the first embodiment of the present invention may manufacture the electrode by cutting the electrode sheet along the cutting line, and simultaneously, each of the edge of the electrode and the edge of the electrode sheet, which are disposed on the cutting line, may be cut to form the inclined surface, thereby simplifying the process, and in particular, reducing the time taken to manufacture the electrode having the inclined edge, particularly, reducing the defect rate.

Hereinafter, an electrode cutting method according to the first embodiment of the present invention will be described.

### [Electrode cutting method according to first embodiment of the present invention]

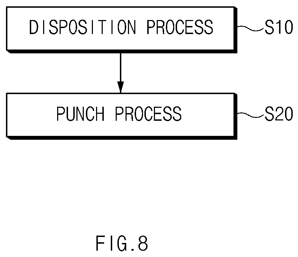

As illustrated in FIGS. 8 to 13, an electrode cutting method according to the first embodiment of the present invention comprises a disposition process of disposing an electrode sheet on a cutting line and a punch process of cutting the electrode sheet along the cutting line to manufacture an electrode, wherein an edge of one end of the electrode disposed on the cutting line is cut together to form an inclined surface, and then, an edge of one end of the electrode sheet, which corresponds to the edge of the one end of the electrode, is cut to form an inclined surface.

Here, the electrode cutting method according to the first embodiment of the present invention uses the electrode cutting device, which is described above, and the electrode cutting device comprises a die member and a punch member. Since the electrode cutting device has been described in detail above, a detailed description thereof will be omitted.

### Disposition process

The disposition process (S10) comprises a first disposition process of disposing a portion of the electrode sheet 10, which is to be cut, on a cutting line α that is partitioned between a disposition part 111 and a full-width cutting groove 112 and a second disposition process of disposing a portion of the electrode sheet 10, which is to be cut, disposed on the cutting line in a V-shaped cutting groove 113 of the die member 110.

In the first disposition process, a full-width support member 130 is provided in the full-width cutting groove to elastically support the electrode sheet disposed in the full-width cutting groove.

In the second disposition process, a V-shaped support member 140 is provided in the V-shaped cutting groove 113 to elastically support the electrode sheet disposed in the V-shaped cutting groove 113.

### Punch process

In the punch process (S20), a full-width punch of the punch member 120 is inserted into the full-width cutting groove 112 to cut the electrode sheet along the cutting line, thereby manufacturing an electrode, and the punch process (S20) comprises a full-width cutting process of cutting an edge of the electrode disposed on the cutting line together to form an inclined surface as an edge of the full-width punch disposed on the cutting line is formed as a full-width inclination surface 122a and a V-shaped cutting process of cutting an edge of the electrode sheet to form an inclined surface by inserting the V-shaped punch of the punch member 120 into the V-shaped cutting groove 113.

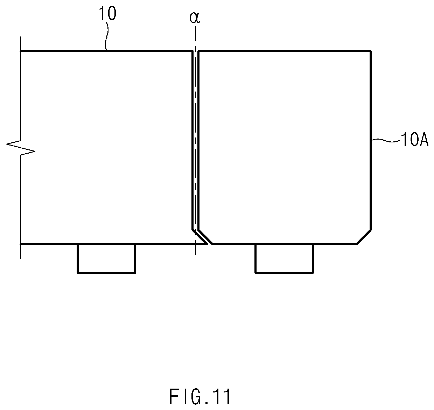

In the full-width cutting process, the full-width punch 122 of the punch member 120 is inserted into the full-width cutting groove 112 to cut the electrode sheet 10, which is disposed on the cutting line, along the cutting line, thereby manufacturing an electrode 10A. Here, as illustrated in FIG. 11, the full-width inclination surface 122a of the full-width punch cuts the edge of the electrode disposed on the cutting line to form the inclined surface.

In the full-width cutting process, the full-width punch cuts the electrode sheet while being inserted into the full-width cutting groove 112 in a state of pressing the electrode sheet disposed in the full-width cutting groove 112 together with the full-width support member 130.

Particularly, in the full-width cutting process, when cutting the electrode sheet 10, the full-width punch and the full-width support member 130 cut the electrode sheet 10 in a state of elastically pressing the electrode sheet 10 to prevent wrinkles from occurring in the electrode sheet 10, thereby improving the cutting accuracy of the electrode sheet.

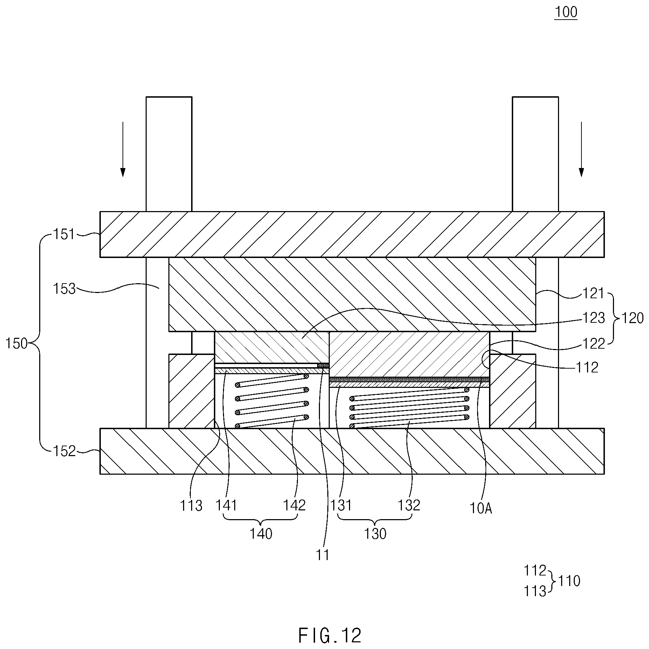

In the V-shaped cutting process, as illustrated in FIG. 12, the V-shaped punch 123 of the punch member 120 cuts the edge of the electrode sheet 10 disposed in the V-shaped groove to form the inclined surface while being inserted into the V-shaped cutting groove 113.

In the V-shaped cutting process, the V-shaped punch cuts the edge of the one end of the electrode sheet to form the inclined surface while being inserted into the V-shaped cutting groove 113 in the state of pressing the electrode sheet disposed in the V-shaped cutting groove 113 together with the V-shaped support member 140.

Particularly, in the V-shaped cutting process, when cutting the edge of the electrode sheet, the V-shaped punch 123 and the V-shaped support member 140 cut the edge of the electrode sheet in the state of elastically pressing the edge of the electrode sheet disposed on the cutting line to prevent the wrinkles from occurring, thereby improving the cutting accuracy of the electrode sheet.

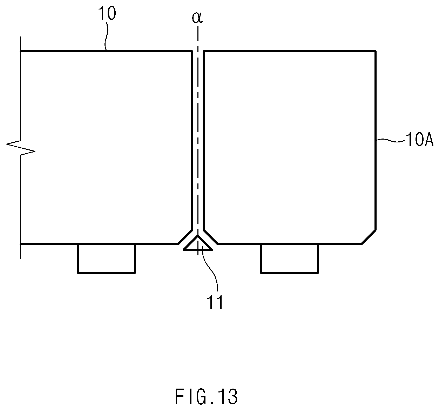

When the punch process is completed as described above, as illustrated in FIG. 13, the electrode sheet disposed on the cutting line α may be cut, and simultaneously, each of the edge of the one end of the electrode and the edge of the one end of the electrode sheet, which are disposed on the cutting line, may be cut to form the inclined plane. In addition, a triangular-shaped cutting piece 11 is generated.

Therefore, in the electrode cutting method according to the first embodiment of the present invention, the electrode having inclined edge may be continuously manufactured.

In this embodiment, the structure, in which only one edge of the electrode has the inclined surface when viewed in the full-length direction, has been described. However, each of both edges may have the inclined surface when viewed in the full-length direction according to the application.

Hereinafter, in descriptions of another embodiment of the present invention, constituents having the same function as the above-mentioned embodiment have been given the same reference numeral in the drawings, and thus duplicated description will be omitted.

### [Electrode manufacturing facility according to second embodiment of the present invention]

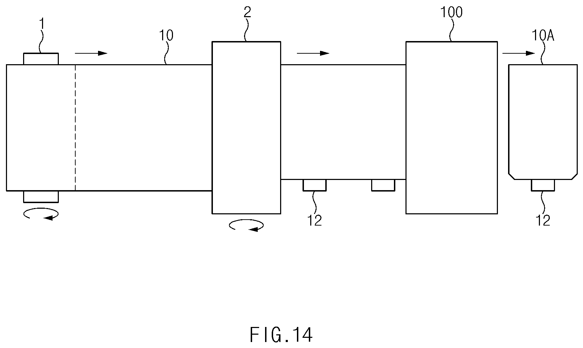

As illustrated in FIG. 14, an electrode manufacturing facility according to a second embodiment of the present invention comprises a transfer device 1 that transfers an electrode sheet 10, on which a non-coating portion 12 is formed, a notching device 2 that notches the non-coating portion of the electrode sheet 10 transferred by the transfer device 1 to process electrode tabs 12 at regular intervals, and an electrode cutting device 100 that cuts the electrode sheet, on which the electrode tab 12 is processed by the notching device 2, to manufacture an electrode 10A having an inclined edge.

Here, the electrode cutting device 100 comprises a die member 110 on which the electrode sheet, on which the electrode tab 12 is processed, is disposed, and a punch member 120 that cuts the electrode sheet 10 disposed on the die member 110 to manufacture the electrode 10A having the inclined edge.

The electrode cutting device 100 has the same configuration and function as the electrolyte cutting device according to the foregoing first embodiment, and thus, a duplicated description thereof will be omitted.

Therefore, the electrode manufacturing facility according to the second embodiment of the present invention may continuously manufacture the electrode 10A having the inclined edge, and in particular, may manufacture the electrode having the uniform quality, and in particular, may simplify the process.

Accordingly, the scope of the present invention is defined by the appended claims more than the foregoing description and the exemplary embodiments described therein.

### [Description of the Symbols]

110: Die member
111: Disposition part
111a: Disposition inclination surface
112: Full-width cutting groove
112a: Full-width guide groove
113: V-shaped cutting groove
113a: V-shaped guide groove
114: Reinforcing plate
115: Coupling groove
120: Punch member
121: Punch body
122: Full-width punch
122a: Full-width inclination surface
123: V-shaped punch
130: Full-width support member
131: Full-width support plate
132: Full-width elastic piece
140: V-shaped support member
141: V-shaped support plate
141a: V-shaped guide protrusion
142: V-shaped elastic piece
150: Guide member
151: Lower guide plate
152: Upper guide plate
153: Guide rod

## Claims

1. An electrode cutting device comprising:
a die member (110) on which an electrode sheet (10) is disposed on a surface, on which a cutting line (α) is partitioned; and
a punch member (120) configured to cut the electrode sheet (10) disposed on the die member (110) along the cutting line (α) to manufacture an electrode,
**characterized in that** the die member (110) comprises:
a disposition part (111) which is provided at one side of the cutting line (α), on which the electrode sheet (10) is disposed, and in which one end thereof disposed on the cutting line (α) is formed as a disposition inclination surface (111a) to form a groove between the cutting line (α) and the disposition inclination surface (111a);
a full-width cutting groove (112) provided at the other side of the cutting line (α); and
a V-shaped cutting groove (113) provided on the cutting line (α) and connected to the groove formed by the disposition inclination surface (111a),
wherein the punch member (120) comprises:
a full-width punch (122) configured to cut the electrode sheet (10) along the cutting line (α) while being inserted into the full-width cutting groove (112), thereby manufacturing the electrode (10a), wherein, since one end thereof corresponding to the disposition inclination surface (111a) is formed as a full-width inclination surface (122a), wherein the full-width inclination surface (122a) is arranged on a first side of the cutting line (α), an edge of the electrode (10a) disposed on the cutting line (α) is cut to form an inclined surface; and
a V-shaped punch (123) configured to cut an edge of the electrode sheet (10) disposed on the disposition inclination surface (111a) while being inserted into the V-shaped cutting groove (113) so as to form an inclined surface, wherein the disposition inclination surface (111a) is arranged on a second side of the cutting line (α) opposite to the first side.

2. The electrode cutting device of claim 1, wherein a reinforcing plate (114) configured to improve strength and horizontality is provided on a top surface of the disposition part (111).

3. The electrode cutting device of claim 2, wherein the reinforcing plate (114) is coupled to a coupling groove (115) formed in the disposition part (111), and
a top surface of the reinforcing plate (114) coupled to the coupling groove (115), an upper end surface of the full-width cutting groove (112), and an upper end surface of the V-shaped cutting groove (113) have the same height.

4. The electrode cutting device of claim 1, further comprising a full-width support member (130) configured to elastically support the electrode sheet (10) disposed in the full-width cutting groove (112),
wherein the full-width support member (130) comprises:
a full-width support plate (131) provided in the full-width cutting groove (112), provided to be movable in a direction of a bottom surface of the full-width cutting groove (112), and configured to elastically support the electrode sheet (10) disposed in the full-width cutting groove (112); and
a full-width elastic piece (142) configured to provide elastic force to the full-width support plate (131) so that the full-width support plate (131) elastically supports the electrode sheet (10),
wherein one end of the full-width support plate (131) disposed on the cutting line (α) is formed as the same inclined surface as the inclined surface of the full-width punch (122).

5. The electrode cutting device of claim 1, further comprising a V-shaped support member (140) configured to elastically support the electrode sheet (10) disposed in the V-shaped cutting groove (113),
wherein the V-shaped support member (140) comprises:
a V-shaped support plate (141) provided in the V-shaped cutting groove (113), provided to be movable in a direction of a bottom surface of the V-shaped cutting groove (113), and configured to elastically support the electrode sheet (10) disposed in the V-shaped cutting groove (113); and
a V-shaped elastic piece (142) configured to provide elastic force to the V-shaped support plate (141) so that the V-shaped support plate (141) elastically supports the electrode sheet (10).

6. The electrode cutting device of claim 1, wherein a cutting surface of the full-width punch (122) configured to cut the electrode sheet (10) and a cutting surface of the V-shaped punch (123) have different heights, and
the cutting surface of the full-width punch (122) is provided to further protrude in a direction of the electrode sheet (10) than the cutting surface of the V-shaped punch (123).

7. The electrode cutting device of claim 4, wherein a full-width guide groove (112a) is formed at one side of the full-width cutting groove (112), and
a full-width guide protrusion movably inserted into the full-width guide groove (112a) is formed on the full-width support plate (131).

8. The electrode cutting device of claim 5, wherein a V-shaped guide groove (113a) is formed at one side of the V-shaped cutting groove (113), and
a V-shaped guide protrusion (141a) movably inserted into the V-shaped guide groove (113a) is formed on the V-shaped support plate (141).

9. The electrode cutting device of claim 1, further comprising a guide member (150) configured to guide the punch member (120) so as to descend or ascend vertically toward the die member (110).

10. The electrode cutting device of claim 9, wherein the guide member (150) comprises:
a lower guide plate (151) on which the die member (110) is installed;
an upper guide plate (152) on which the punch member (120) is installed; and
a guide rod (153) provided on the lower guide plate (151) and coupled to the upper guide plate (152) to guide the upper guide plate (152) so as to ascend or descend vertically toward the die member (110).

11. An electrode cutting method comprising:
a disposition process of disposing an electrode sheet (10) on a cutting line (α); and
a punch process of cutting the electrode sheet (10) along the cutting line (α) to manufacture an electrode (10a), **characterized in that** the punch process comprises a full-width cutting process of cutting an edge of one end of the electrode (10a) disposed on the cutting line (α) together to form an inclined surface on a first side of the cutting line (α), and a V-shaped cutting process of cutting an edge of one end of the electrode sheet (10) corresponding to the edge of the one end of the electrode (10a) to form an inclined surface on a second side of the cutting line (α) opposite to the first side.

12. The electrode cutting process of claim 11, wherein the disposition process comprises a first disposition process of disposing a portion of the electrode sheet (10), which is to be cut, on a cutting line (α) that is partitioned between a disposition part (111) and a full-width cutting groove (112) and a second disposition process of disposing one end of the electrode sheet (10) disposed on the cutting line (α) in a V-shaped cutting groove (113) of a die member (110), and
in the punch process, a full-width punch (122) of a punch member (120) is inserted into the full-width cutting groove (112) to cut the electrode sheet (10) along the cutting line (α), thereby manufacturing an electrode, wherein the punch process comprises a full-width cutting process of cutting an edge of the electrode (10a) disposed on the cutting line (α) together to form an inclined surface as an edge of the full-width punch (122) disposed on the cutting line (α) is formed as a full-width inclination surface (122a), and a V-shaped cutting process of cutting an edge of the electrode sheet (10) to form an inclined surface by inserting a V-shaped punch (123) of the punch member (120) into the V-shaped cutting groove (113).

13. The electrode cutting process of claim 12, wherein, in the first disposition process, a full-width support member (130) is provided in the full-width cutting groove (112) to elastically support the electrode sheet (10) disposed in the full-width cutting groove (112), and
in the full-width cutting process, the full-width punch (122) cuts the electrode sheet (10) along the cutting line (α) while being inserted into the full-width cutting groove (112) in a state of pressing the electrode sheet (10) disposed in the full-width cutting groove (112) together with the full-width support member (130).

14. The electrode cutting process of claim 12, wherein, in the second disposition process, a V-shaped support member (140) is provided in the V-shaped cutting groove (113) to elastically support the electrode sheet (10) disposed in the V-shaped cutting groove (113), and
in the V-shaped cutting process, the V-shaped punch (123) cuts an edge of one end of the electrode sheet (10) to form an inclined surface while being inserted into the V-shaped cutting groove (113) in a state of pressing the electrode sheet (10) disposed in the V-shaped cutting groove (113) together with the V-shaped support member (140).

15. An electrode manufacturing facility comprising:
a transfer device configured to transfer an electrode sheet (10), on which a non-coating portion is formed;
a notching device configured to notch the non-coating portion of the electrode sheet (10) transferred by the transfer device so as to process electrode tabs (12) at regular intervals; and
the electrode cutting device of claim 1, which is configured to cut the electrode sheet (10), on which the electrode tabs (12) are processed by the notching device, so as to manufacture an electrode.

## Patentansprüche

1. Elektrodenschneidvorrichtung aufweisend:
ein Die-Element (110), auf dem eine Elektrodenplatte (10) auf einer Oberfläche angeordnet wird, auf der eine Schnittlinie (α) unterteilt ist; und
ein Stempelelement (120), das konfiguriert ist, die auf dem Die-Element (110) angeordnete Elektrodenplatte (10) entlang der Schnittlinie (α) zu schneiden, um eine Elektrode herzustellen,
**dadurch gekennzeichnet, dass** das Die-Element (110) aufweist:
ein Anordnungsteil (111), das auf einer Seite der Schnittlinie (α) bereitgestellt ist, auf der die Elektrodenplatte (10) angeordnet wird, und in dem ein Ende davon, das auf der Schnittlinie (α) angeordnet ist, als eine Anordnungsneigungsfläche (111a) ausgebildet ist, um eine Nut zwischen der Schnittlinie (α) und der Anordnungsneigungsfläche (111a) zu bilden;
eine Schneidnut (112) voller Breite, die auf der anderen Seite der Schnittlinie (α) bereitgestellt ist; und
eine V-förmige Schneidnut (113), die auf der Schnittlinie (α) bereitgestellt ist und mit der durch die Anordnungsneigungsfläche (111a) gebildeten Nut verbunden ist,
wobei das Stempelelement (120) aufweist:
einen Stempel (122) voller Breite, der konfiguriert ist, die Elektrodenplatte (10) entlang der Schnittlinie (α) zu schneiden, während er in die Schneidnut (112) voller Breite eingeführt wird, wodurch die Elektrode (10a) hergestellt wird, wobei, da ein Ende davon, das der Anordnungsneigungsfläche (111a) entspricht, als eine Neigungsfläche (122a) voller Breite ausgebildet ist, wobei die Neigungsfläche (122a) voller Breite auf einer ersten Seite der Schnittlinie (α) angeordnet ist, ein Rand der auf der Schnittlinie (α) angeordneten Elektrode (10a) geschnitten wird, um eine geneigte Oberfläche zu bilden; und
einen V-förmigen Stempel (123), der konfiguriert ist, einen Rand der auf der Anordnungsneigungsfläche (111a) angeordneten Elektrodenplatte (10) zu schneiden, während er in die V-förmige Schneidnut (113) eingeführt wird, um eine geneigte Oberfläche zu bilden, wobei die Anordnungsneigungsfläche (111a) auf einer zweiten Seite der Schnittlinie (α) gegenüber der ersten Seite angeordnet ist.

2. Elektrodenschneidvorrichtung nach Anspruch 1, wobei eine Verstärkungsplatte (114), die konfiguriert ist, Festigkeit und Horizontalität zu verbessern, auf einer oberen Oberfläche des Anordnungsteils (111) bereitgestellt ist.

3. Elektrodenschneidvorrichtung nach Anspruch 2, wobei die Verstärkungsplatte (114) mit einer Kopplungsnut (115) verbunden ist, die in dem Anordnungsteil (111) ausgebildet ist, und
eine obere Oberfläche der Verstärkungsplatte (114), die mit der Kopplungsnut (115) verbunden ist, eine obere Endfläche der Schneidnut (112) voller Breite und eine obere Endfläche der V-förmigen Schneidnut (113) die gleiche Höhe aufweisen.

4. Elektrodenschneidvorrichtung nach Anspruch 1, ferner aufweisend ein Stützelement (130) voller Breite, das konfiguriert ist, die in der Schneidnut (112) voller Breite angeordnete Elektrodenplatte (10) elastisch zu stützen,
wobei das Stützelement (130) voller Breite aufweist:
eine Stützplatte (131) voller Breite, die in der Schneidnut (112) voller Breite bereitgestellt ist, die so bereitgestellt ist, um in einer Richtung einer unteren Oberfläche der Schneidnut (112) voller Breite beweglich zu sein, und konfiguriert ist, die in der Schneidnut (112) voller Breite angeordnete Elektrodenplatte (10) elastisch zu stützen; und
ein elastisches Teil (142) voller Breite, das konfiguriert ist, der Stützplatte (131) voller Breite eine elastische Kraft bereitzustellen, so dass die Stützplatte (131) voller Breite die Elektrodenplatte (10) elastisch stützt,
wobei ein Ende der auf der Schnittlinie (α) angeordneten Stützplatte (131) voller Breite als die gleiche geneigte Oberfläche wie die geneigte Oberfläche des Stempels (122) voller Breite ausgebildet ist.

5. Elektrodenschneidvorrichtung nach Anspruch 1, ferner aufweisend ein V-förmiges Stützelement (140), das konfiguriert ist, die in der V-förmigen Schneidnut (113) angeordnete Elektrodenplatte (10) elastisch zu stützen,
wobei das V-förmige Stützelement (140) aufweist:
eine V-förmige Stützplatte (141), die in der V-förmigen Schneidnut (113) bereitgestellt ist, die so bereitgestellt ist, um in einer Richtung einer unteren Oberfläche der V-förmigen Schneidnut (113) beweglich zu sein, und konfiguriert ist, die in der V-förmigen Schneidnut (113) angeordnete Elektrodenplatte (10) elastisch zu stützen; und
ein V-förmiges elastisches Teil (142), das konfiguriert ist, der V-förmigen Stützplatte (141) eine elastische Kraft bereitzustellen, so dass die V-förmige Stützplatte (141) die Elektrodenplatte (10) elastisch stützt.

6. Elektrodenschneidvorrichtung nach Anspruch 1, wobei eine Schneidfläche des Stempels (122) voller Breite, der konfiguriert ist, die Elektrodenplatte (10) zu schneiden, und eine Schneidfläche des V-förmigen Stempels (123) unterschiedliche Höhen aufweisen, und
die Schneidfläche des Stempels (122) voller Breite so bereitgestellt ist, um in einer Richtung der Elektrodenplatte (10) weiter vorzustehen als die Schneidfläche des V-förmigen Stempels (123).

7. Elektrodenschneidvorrichtung nach Anspruch 4, wobei eine Führungsnut (112a) voller Breite an einer Seite der Schneidnut (112) voller Breite ausgebildet ist, und
ein Führungsvorsprung voller Breite, der beweglich in die Führungsnut (112a) voller Breite eingesetzt ist, an der Stützplatte (131) voller Breite ausgebildet ist.

8. Elektrodenschneidvorrichtung nach Anspruch 5, wobei eine V-förmige Führungsnut (113a) an einer Seite der V-förmigen Schneidnut (113) ausgebildet ist, und
ein V-förmiger Führungsvorsprung (141a), der beweglich in die V-förmige Führungsnut (113a) eingesetzt ist, an der V-förmigen Stützplatte (141) ausgebildet ist.

9. Elektrodenschneidvorrichtung nach Anspruch 1, ferner aufweisend ein Führungselement (150), das konfiguriert ist, das Stempelelement (120) so zu führen, dass es vertikal in Richtung des Die-Elements (110) absteigt oder ansteigt.

10. Elektrodenschneidvorrichtung nach Anspruch 9, wobei das Führungselement (150) aufweist:
eine untere Führungsplatte (151), auf der das Die-Element (110) installiert ist;
eine obere Führungsplatte (152), auf der das Stempelelement (120) installiert ist; und
eine Führungsstange (153), die auf der unteren Führungsplatte (151) vorgesehen und mit der oberen Führungsplatte (152) gekoppelt ist, um die obere Führungsplatte (152) so zu führen, dass sie vertikal in Richtung des Die-Elements (110) ansteigt oder absteigt.

11. Elektrodenschneidverfahren aufweisend:
einen Anordnungsprozess des Anordnens einer Elektrodenplatte (10) auf einer Schnittlinie (α); und
einen Stempelprozess des Schneidens der Elektrodenplatte (10) entlang der Schnittlinie (α), um eine Elektrode (10a) herzustellen, **dadurch gekennzeichnet, dass** der Stempelprozess einen Schneidprozess voller Breite des Schneidens eines Randes eines Endes der auf der Schnittlinie (α) angeordneten Elektrode (10a), um eine geneigte Oberfläche auf einer ersten Seite der Schnittlinie (α) zu bilden, und einen V-förmigen Schneidprozess des Schneidens eines Randes eines Endes der Elektrodenplatte (10), der dem Rand des einen Endes der Elektrode (10a) entspricht, um eine geneigte Oberfläche auf einer zweiten Seite der Schnittlinie (α) gegenüber der ersten Seite zu bilden, umfasst.

12. Elektrodenschneidverfahren nach Anspruch 11, wobei der Anordnungsprozess einen ersten Anordnungsprozess des Anordnens eines Abschnitts der Elektrodenplatte (10), der geschnitten werden soll, auf einer Schnittlinie (α), die zwischen einem Anordnungsteil (111) und einer Schneidnut (112) voller Breite unterteilt ist, und einen zweiten Anordnungsprozess des Anordnens eines Endes der auf der Schnittlinie (α) angeordneten Elektrodenplatte (10) in einer V-förmigen Schneidnut (113) eines Die-Elements (110) umfasst, und
in dem Stempelprozess ein Stempel (122) voller Breite eines Stempelelements (120) in die Schneidnut (112) voller Breite eingeführt wird, um die Elektrodenplatte (10) entlang der Schnittlinie (α) zu schneiden, wodurch eine Elektrode hergestellt wird, wobei der Stempelprozess einen Schneidprozess voller Breite des Schneidens eines Randes der auf der Schnittlinie (α) angeordneten Elektrode (10a), um eine geneigte Oberfläche zu bilden, während ein Rand des auf der Schnittlinie (α) angeordneten Stempels (122) voller Breite als eine Neigungsfläche (122a) voller Breite ausgebildet ist, und einen V-förmigen Schneidprozess des Schneidens eines Randes der Elektrodenplatte (10), um eine geneigte Oberfläche zu bilden, durch Einführen eines V-förmigen Stempels (123) des Stempelelements (120) in die V-förmige Schneidnut (113) umfasst.

13. Elektrodenschneidverfahren nach Anspruch 12, wobei in dem ersten Anordnungsprozess ein Stützelement (130) voller Breite in der Schneidnut (112) voller Breite bereitgestellt ist, um die in der Schneidnut (112) voller Breite angeordnete Elektrodenplatte (10) elastisch zu stützen, und
in dem Schneidprozess voller Breite der Stempel (122) voller Breite die Elektrodenplatte (10) entlang der Schnittlinie (α) schneidet, während er in einem Zustand des Zusammendrückens der in der Schneidnut (112) voller Breite angeordneten Elektrodenplatte (10) mit dem Stützelement (130) voller Breite in die Schneidnut (112) voller Breite eingeführt wird.

14. Elektrodenschneidverfahren nach Anspruch 12, wobei in dem zweiten Anordnungsprozess ein V-förmiges Stützelement (140) in der V-förmigen Schneidnut (113) bereitgestellt ist, um die in der V-förmigen Schneidnut (113) angeordnete Elektrodenplatte (10) elastisch zu stützen, und
in dem V-förmigen Schneidprozess der V-förmige Stempel (123) einen Rand eines Endes der Elektrodenplatte (10) schneidet, um eine geneigte Oberfläche zu bilden, während er in einem Zustand des Zusammendrückens der in der V-förmigen Schneidnut (113) angeordneten Elektrodenplatte (10) mit dem V-förmigen Stützelement (140) in die V-förmige Schneidnut (113) eingeführt wird.

15. Elektrodenherstellungsanlage aufweisend:
eine Transfervorrichtung, die konfiguriert ist, um eine Elektrodenplatte (10) zu transferieren, auf der ein Nicht-Beschichtungsabschnitt gebildet ist;
eine Kerbvorrichtung, die konfiguriert ist, um den Nicht-Beschichtungsabschnitt der von der Transfervorrichtung transferierten Elektrodenplatte (10) einzukerben, um Elektrodenlaschen (12) in regelmäßigen Intervallen zu verarbeiten; und
die Elektrodenschneidvorrichtung nach Anspruch 1, die konfiguriert ist, um die Elektrodenplatte (10), auf der die Elektrodenlaschen (12) von der Kerbvorrichtung verarbeitet werden, zu schneiden, um eine Elektrode herzustellen.

## Revendications

1. Dispositif de coupe d'électrode comprenant :
un élément de matrice (110) sur lequel une feuille d'électrode (10) est disposée sur une surface, sur laquelle une ligne de coupe (α) est divisée ; et
un élément de poinçon (120) configuré pour couper la feuille d'électrode (10) disposée sur l'élément de matrice (110) le long de la ligne de coupe (α) pour fabriquer une électrode,
**caractérisé en ce que** l'élément de matrice (110) comprend :
une partie d'agencement (111) qui est fournie sur un côté de la ligne de coupe (α), sur laquelle la feuille d'électrode (10) est disposée, et dans laquelle une de ses extrémités disposée sur la ligne de coupe (α) est formée en une surface inclinée d'agencement (111a) pour former une rainure entre la ligne de coupe (α) et la surface inclinée d'agencement (111a) ;
une rainure de coupe pleine largeur (112) fournie sur l'autre côté de la ligne de coupe (α) ; et
une rainure de coupe en forme de V (113) fournie sur la ligne de coupe (α) et connectée à la rainure formée par la surface inclinée d'agencement (111a),
dans lequel l'élément de poinçon (120) comprend :
un poinçon pleine largeur (122) configuré pour couper la feuille d'électrode (10) le long de la ligne de coupe (α) pendant qu'il est introduit dans la rainure de coupe pleine largeur (112), fabriquant ainsi l'électrode (10a), dans lequel, puisque un de ses extrémités correspondant à la surface inclinée d'agencement (111a) est formée en une surface inclinée pleine largeur (122a), dans lequel la surface inclinée pleine largeur (122a) est agencée sur un premier côté de la ligne de coupe (α), un bord de l'électrode (10a) disposé sur la ligne de coupe (α) est coupé pour former une surface inclinée ; et
un poinçon en forme de V (123) configuré pour couper un bord de la feuille d'électrode (10) disposé sur la surface inclinée d'agencement (111a) pendant qu'il est introduit dans la rainure de coupe en forme de V (113) afin de former une surface inclinée, dans lequel la surface inclinée d'agencement (111a) est agencée sur un deuxième côté de la ligne de coupe (α) à l'opposé du premier côté.

2. Dispositif de coupe d'électrode selon la revendication 1, dans lequel une plaque de renforcement (114) configurée pour améliorer la résistance et l'horizontalité est fournie sur une surface supérieure de la partie d'agencement (111).

3. Dispositif de coupe d'électrode selon la revendication 2, dans lequel la plaque de renforcement (114) est accouplée à une rainure d'accouplement (115) formée dans la partie d'agencement (111), et
une surface supérieure de la plaque de renforcement (114) accouplée à la rainure d'accouplement (115), une surface d'extrémité supérieure de la rainure de coupe pleine largeur (112) et une surface d'extrémité supérieure de la rainure de coupe en forme de V (113) ont la même hauteur.

4. Dispositif de coupe d'électrode selon la revendication 1, comprenant en outre un élément de support pleine largeur (130) configuré pour soutenir élastiquement la feuille d'électrode (10) disposée dans la rainure de coupe pleine largeur (112),
dans lequel l'élément de support pleine largeur (130) comprend :
une plaque de support pleine largeur (131) fournie dans la rainure de coupe pleine largeur (112), fournie pour pouvoir être déplacée dans une direction d'une surface inférieure de la rainure de coupe pleine largeur (112), et configurée pour soutenir élastiquement la feuille d'électrode (10) disposée dans la rainure de coupe pleine largeur (112) ; et
une pièce élastique pleine largeur (142) configurée pour fournir une force élastique à la plaque de support pleine largeur (131) de façon à ce que la plaque de support pleine largeur (131) soutienne élastiquement la feuille d'électrode (10),
dans lequel une extrémité de la plaque de support pleine largeur (131) disposée sur la ligne de coupe (α) est formée pour être la surface inclinée de la surface inclinée du poinçon pleine largeur (122).

5. Dispositif de coupe d'électrode selon la revendication 1, comprenant en outre un élément de support en forme de V (140) configuré pour soutenir élastiquement la feuille d'électrode (10) disposée dans la rainure de coupe en forme de V (113),
dans lequel l'élément de support en forme de V (140) comprend :
une plaque de support en forme de V (141) fournie dans la rainure de coupe en forme de V (113), fournie pour pouvoir être déplacée dans une direction d'une surface inférieure de la rainure de coupe en forme de V (113), et configurée pour soutenir élastiquement la feuille d'électrode (10) disposée dans la rainure de coupe en forme de V (113) ; et
une pièce élastique en forme de V (142) configurée pour fournir une force élastique à la plaque de support en forme de V (141) de façon à ce que la plaque de support en forme de V (141) soutienne élastiquement la feuille d'électrode (10).

6. Dispositif de coupe d'électrode selon la revendication 1, dans lequel une surface de coupe du poinçon pleine largeur (122) configurée pour couper la feuille d'électrode (10) et une surface de coupe du poinçon en forme de V (123) ont des hauteurs différentes, et
la surface de coupe du poinçon pleine largeur (122) est fournie pour saillir plus dans une direction de la feuille d'électrode (10) que la surface de coupe du poinçon en forme de V (123).

7. Dispositif de coupe d'électrode selon la revendication 4, dans lequel une rainure de guidage pleine largeur (112a) est formée sur un côté de la rainure de coupe pleine largeur (112), et
une saillie de guidage pleine largeur introduite de manière mobile dans la rainure de guidage pleine largeur (112a) est formée sur la plaque de support pleine largeur (131).

8. Dispositif de coupe d'électrode selon la revendication 5, dans lequel une rainure de guidage en forme de V (113a) est formée sur un côté de la rainure de coupe en forme de V (113), et
une saillie de guidage en forme de V (141a) introduite de manière mobile dans la rainure de guidage en forme de V (113a) est formée sur la plaque de support en forme de V (141).

9. Dispositif de coupe d'électrode selon la revendication 1, comprenant en outre un élément de guidage (150) configuré pour guider l'élément de poinçon (120) de façon à descendre ou monter verticalement vers l'élément de matrice (110).

10. Dispositif de coupe d'électrode selon la revendication 9, dans lequel l'élément de guidage (150) comprend :
une plaque de guidage inférieure (151) sur laquelle l'élément de matrice (110) est installé ;
une plaque de guidage supérieure (152) sur laquelle l'élément de poinçon (120) est installé ; et
une tige de guidage (153) fournie sur la plaque de guidage inférieure (151) et accouplée à la plaque de guidage supérieure (152) pour guider la plaque de guidage supérieure (152) de façon à monter ou descendre verticalement vers l'élément de matrice (110).

11. Procédé de coupe d'électrode comprenant :
un procédé d'agencement consistant à disposer une feuille d'électrode (10) sur une ligne de coupe (α) ; et
un procédé de poinçonnage consistant à couper la feuille d'électrode (10) le long de la ligne de coupe (α) pour fabriquer une électrode (10a), **caractérisé en ce que** le procédé de poinçonnage comprend un procédé de coupe pleine largeur consistant à couper un bord d'une extrémité de l'électrode (10a) disposée sur la ligne de coupe (α) pour former ensemble une surface inclinée sur un premier côté de la ligne de coupe (α), et un procédé de coupe en forme de V consistant à couper un bord d'une extrémité de la feuille d'électrode (10) correspondant au bord de l'extrémité de l'électrode (10a) pour former une surface inclinée sur un deuxième côté de la ligne de coupe (α) à l'opposé du premier côté.

12. Procédé de coupe d'électrode selon la revendication 11, dans lequel le procédé d'agencement comprend un premier procédé d'agencement consistant à disposer une partie de la feuille d'électrode (10), qui doit être coupée, sur une ligne de coupe (α) qui est divisée entre une partie d'agencement (111) et une rainure de coupe pleine largeur (112) et un deuxième procédé d'agencement consistant à disposer une extrémité de la feuille d'électrode (10) disposée sur la ligne de coupe (α) dans une rainure de coupe en forme de V (113) d'un élément de matrice (110), et
dans le procédé de poinçonnage, un poinçon pleine largeur (122) d'un élément de poinçon (120) est introduit dans la rainure de coupe pleine largeur (112) pour couper la feuille d'électrode (10) le long de la ligne de coupe (α), fabriquant ainsi une électrode, dans lequel le procédé de poinçonnage comprend un procédé de coupe pleine largeur consistant à couper un bord de l'électrode (10a) disposé sur la ligne de coupe (α) pour former ensemble une surface inclinée lorsqu'un bord du poinçon pleine largeur (122) disposé sur la ligne de coupe (α) est formé en une surface inclinée pleine largeur (122a), et un procédé de coupe en forme de V consistant à couper un bord de la feuille d'électrode (10) pour former une surface inclinée en introduisant un poinçon en forme de V (123) de l'élément de poinçon (120) dans la rainure de coupe en forme de V (113).

13. Procédé de coupe d'électrode selon la revendication 12, dans lequel, dans le premier procédé d'agencement, un élément de support pleine largeur (130) est fourni dans la rainure de coupe pleine largeur (112) pour soutenir élastiquement la feuille d'électrode (10) disposée dans la rainure de coupe pleine largeur (112), et
dans le procédé de coupe pleine largeur, le poinçon pleine largeur (122) coupe la feuille d'électrode (10) le long de la ligne de coupe (α) pendant qu'il est introduit dans la rainure de coupe pleine largeur (112) dans un état de pressage de la feuille d'électrode (10) disposée dans la rainure de coupe pleine largeur (112) ainsi que l'élément de support pleine largeur (130).

14. Procédé de coupe d'électrode selon la revendication 12, dans lequel, dans le deuxième procédé d'agencement, un élément de support en forme de V (140) est fourni dans la rainure de coupe en forme de V (113) pour soutenir élastiquement la feuille d'électrode (10) disposée dans la rainure de coupe en forme de V (113), et
dans le procédé de coupe en forme de V, le poinçon en forme de V (123) coupe un bord d'une extrémité de la feuille d'électrode (10) pour former une surface inclinée pendant qu'il est introduit dans la rainure de coupe en forme de V (113) dans un état de pressage de la feuille d'électrode (10) disposée dans la rainure de coupe en forme de V (113) ainsi que l'élément de support en forme de V (140).

15. Installation de fabrication d'électrode comprenant :
un dispositif de transfert configuré pour transférer une feuille d'électrode (10), sur laquelle une partie de non revêtement est formée ;
un dispositif d'entaillage configuré pour entailler la partie de non revêtement de la feuille d'électrode (10) transférée par le dispositif de transfert afin de traiter des languettes d'électrode (12) à intervalles réguliers ; et
un dispositif de coupe d'électrode selon la revendication 1, lequel est configuré pour couper la feuille d'électrode (10), sur laquelle les languettes d'électrode (12) sont traitées par le dispositif d'entaillage, afin de fabriquer une électrode.
